# EUROPEAN PATENT SPECIFICATION

(11) **EP 3 232 761 B1**
(45) Date of publication and mention of the grant of the patent: **01.08.2018**
(21) Application number: 14825116.8
(22) Date of filing: 15.12.2014
(51) Int. Cl.: A01C 15/02, A01C 17/00

(54) **LEVER ACTUABLE CONTROL FOR VARYING DEGREE OF OPENING OF DISPENSING HOLE IN SPREADER**
PER HEBEL BETÄTIGBARE STEUERUNG FÜR UNTERSCHIEDLICHE ÖFFNUNGSGRADE VON LÖCHERN IN EINEM SPREIZER
LEVIER DE COMMANDE POUVANT ÊTRE ACTIONNÉ POUR FAIRE VARIER LE DEGRÉ D'OUVERTURE DE L'ORIFICE DE DISTRIBUTION D'UN ÉPANDEUR

(43) Date of publication of application: 25.10.2017
(73) Proprietor: Husqvarna AB, 561 82 Huskvarna (SE)
(72) Inventor: KOHL, Peter, 89267 Illertissen (DE)
(74) Representative: Finkele, Rolf
(86) International application number: PCT/EP2014/077729
(87) International publication number: WO 2016/095946

(56) References cited:
- EP-A1- 1 763 985
- US-A- 2 513 810
- US-A- 2 767 887
- US-A- 4 106 704

## Description

### TECHNICAL FIELD

The present invention relates to a spreader, and more particularly to a lever actuable control for varying a degree of opening of dispensing hole in the spreader.

### BACKGROUND

Spreaders are push handle type garden tools commonly used for uniformly distributing or spreading a pulverized or granular material such as grains, seeds, fertilizers, weed killers and the like over a ground, a field, a garden, a lawn, a golf course or other surfaces. A spreader includes a bucket or a hopper for storing the granular material to be spreaded, and the bucket or the hopper is supported by a pair of wheels to drive or move around the spreader. The bucket includes at least one material dispensing hole provided at a bottom portion of thereof. The material dispensing hole allows spreading of the granular material over the ground under the action of gravity, while moving the spreader, and thus uniformly distributing the material over the ground. Generally, spreaders are equipped with an adjustment mechanism to control a rate of discharge or feed rate of the material through the material dispensing hole.

Conventionally, the adjustment mechanism includes a spring-loaded adjustment element slidably mounted on the bucket and configured to slide over the material dispensing hole. The sliding movement of the adjustment element may selectively vary a degree of opening of the material dispensing hole anywhere between a full-open position and a full-closed position. The adjustment mechanism further includes a linking element, such as a rod, a cable or a wire or a Bowden cable, which is connected between the adjustment element and a manually actuable lever. The lever may be a hand controller lever pivotally connected to a push handle, a hand rail or a bail handle of the spreader, and provided adjacent to a gripping portion of the handle. In this configuration, based on a pivotal movement of the lever the degree of opening of the material dispensing hole is regulated. However, this type of the adjustment mechanism requires a skilled user to regulate the degree of opening of the material dispensing hole by applying a varying pressure on the lever.

Alternatively, in prior art, various mechanisms are disclosed which are directed towards adjusting a length of the linking element connected between the adjustment element and the lever. By varying the length of the linking element different degree of opening of the material dispensing hole is achieved for a substantially same pivotal movement of the lever. For example, U.S. Patent No. 8,376,250 ('250 patent) discloses a control mechanism for a lawn spreader which controls output flow of granular material out of the spreader hopper by adjusting the position of a control cable anchor point. According to '250 patent, the control mechanism adjusts the effective length of the control cable by adjusting the anchor point at the control mechanism, while a hopper aperture termination point of the control cable remains fixed. The control mechanism includes a clamping portion for clamping to a tubular handle of the spreader. A top surface of the clamp portion, adjacent to the handle, is provided with a slide portion for a slidable cable anchor shuttle, which internally provides the anchor point for the control cable. Further, a dial housed may be rotated to various indicated positions which in turn control the position of the shuttle on the slide portion, thereby adjusting the position of the control cable anchor point. The '250 patent discloses the control mechanism having many parts which may increase the manufacturing and maintenance cost associated with this type of the adjustment mechanism. Moreover, the tension in the control cable is needed to be adjusted after adjusting the position of a control cable anchor point.

US 2 767 887 A discloses a manually operated spreader for depositing seed, fertilizer, and other material on a lawn or on a small garden, providing a hand operated means for controlling the feeding of the material from the spreader onto the surface to be treated. Therefore, in light of the foregoing, there is a need for an improved spreader openings adjustment mechanism in a spreader.

### SUMMARY

In view of the above, it is an objective of the present invention to solve or at least reduce the problems discussed above. The objective is at least partially achieved according to a spreader, in an embodiment of the present invention. A spreader includes a bucket and a handle unit connected to the bucket. The spreader includes a pair of wheels attached to the bucket configured to move the spreader. The spreader further includes at least one material dispensing hole disposed at a bottom portion of the bucket. The spreader includes an adjustment mechanism for controlling a rate of discharge through the material dispensing hole. The adjustment mechanism includes an adjustment element slidably mounted on the bucket and disposed over the material dispensing hole, wherein a movement of the adjustment element is configured to vary a degree of opening of the material dispensing hole between a full open position and a full closed position. A linking element having a first end and a second end, the first end of the linking element is attached to the adjustment element; and a manually actuable lever having an attachment portion to support the second end of the linking element. The attachment portion of the manually actuable lever have a circular arc profile with a geometric centre at a point of support of the linking element with the bucket, and the second end of the linking element is movable along the attachment portion.

According to an aspect of the invention, the attachment portion has a toothed profile to engage with an inclusion element provided at the second end of the linking element. The inclusion element includes a biasing element configured to provide a constant downward force on the inclusion element to firmly lock the inclusion element at various positions over the length of the attachment portion.

According to another aspect of the invention, the attachment portion has a plurality of holes to detachably support the second end of the linking element.

According to yet another aspect of the invention, the attachment portion has a rack gear profile to engage with a pinion gear provided at the second end of the linking element.

According to an aspect of the invention, the linking element is a cable. Further, the manually actuable lever is pivotally attached to the handle unit.

### BRIEF DESCRIPTION OF THE DRAWINGS

The invention will be described in more detail with reference to the enclosed drawings, wherein:
FIG. **1A** illustrates a perspective view of a spreader, according to an embodiment of the present invention;
FIG. **1B** and FIG. **1C** illustrate perspective views of the spreader of FIG. **1A** in a first working position;
FIG. **1D** and FIG. **1E** illustrate perspective views of the spreader of FIG. **1A** in a second working position;
FIG. **1F** and FIG. **1G** illustrate perspective views of the spreader of FIG. **1A** in a third working position;
FIG. **2** illustrates a perspective view of a spreader, according to another embodiment of the present invention;
FIG. **3A** illustrates a perspective view of a spreader, according to yet another embodiment of the present invention; and
FIG. **3B** illustrates a detailed view of the spreader of FIG. **3A****.**

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

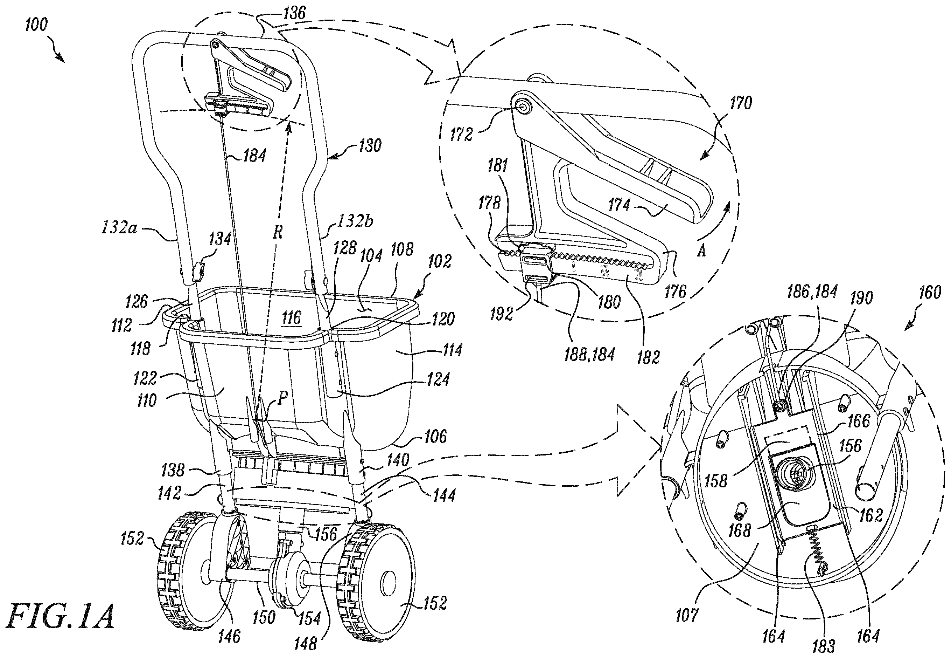

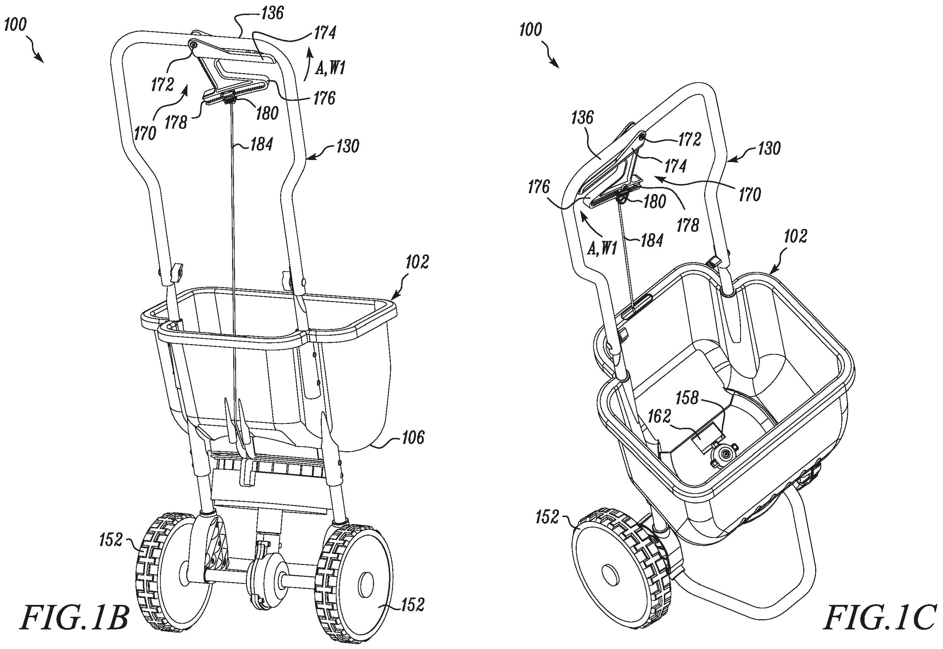

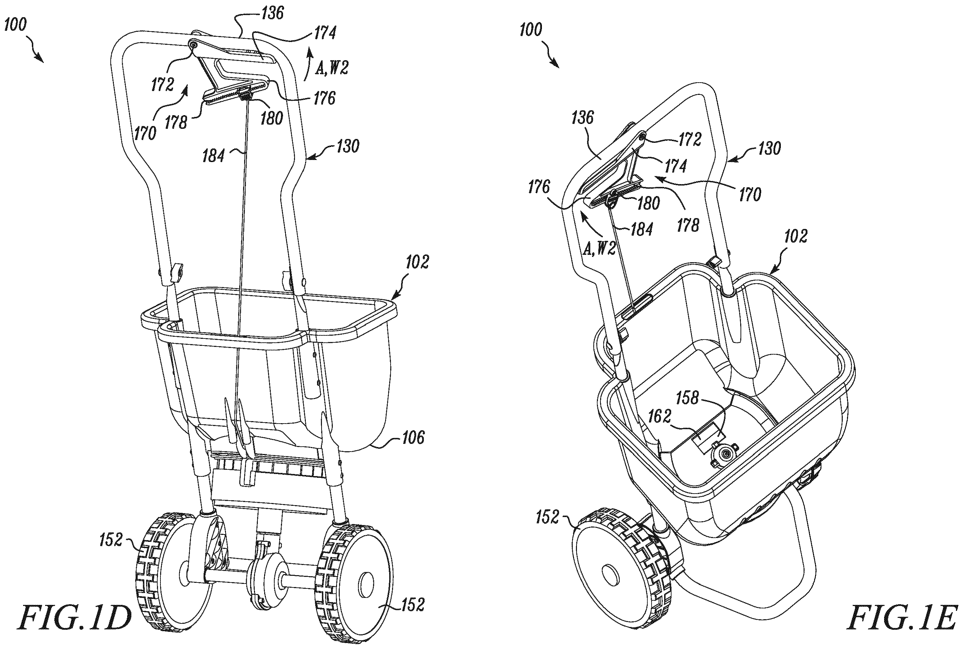

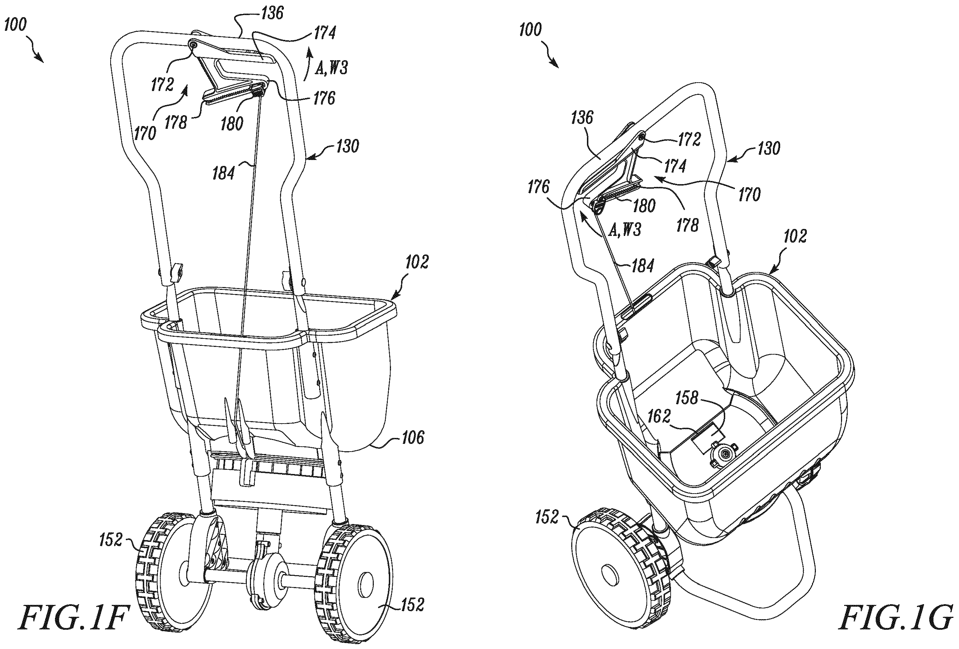

FIG. **1** illustrates a perspective view of a spreader **100,** according to an embodiment of the present invention. The spreader **100,** as illustrated in FIG. **1****,** is a broadcast spreader used for uniformly distributing or spreading a pulverized or granular material such as grains, seeds, fertilizers, weed killers and the like over a ground, a field, a garden, a lawn, a golf course or any other surface. Broadcast spreaders (also called rotary spreaders) distribute the granular material in a wider distribution range and thus the process of spreading the granular material is fast and far reaching. In another embodiment, the spreader **100** may be a drop spreader which drops the granular material directly onto the surface in a straight path with even spread.

The spreader **100** includes a hopper or a bucket **102** made of plastic, wood, or sheet metal having an open top **104.** The bucket **102** has a bottom portion **106** and a front wall **108,** a rear wall **110** extending between a first side wall **112** and a second side wall **114** to define a storage cavity **116.** The shape of the rear wall may be substantially U-shaped. The walls **108, 110, 112,** and **114** may be joined together by welding, riveting or integrally formed together by moulding, stamping or bending. In various other embodiments, the bucket **102** may have an inverted dome shape, a substantially cylindrical shape, or an inverted frusto-conical shape which facilitates the storage of the granular material to be spreaded.

According to an embodiment of the present invention, the rear wall **110** of the bucket **102** includes a pair of openings **118, 120** disposed substantially equidistant from the first and second side walls **112, 114,** respectively. The openings **118, 120** extend into respective hollow protrusions **122, 124** disposed on the rear wall **110** adjacent to the open top **104** which are configured to removably fix two side poles **126, 128.** These side poles **126, 128** are used to detachably connect a handle unit **130,** the handle unit **130** having a first arm **132a** and a second arm **132b,** with the bucket **102.** The first and second arms **132a, 132b** are detachably connected to the respective side poles **126, 128** by using locking wing nuts **134** which also enable a user to lock the handle unit **130** in upright position during working and also allow the handle unit **130** to fold when not in use. Alternatively, the connection between the side poles **126, 128** and the first and second arms **130, 132** may be a snap fit connection. The handle unit **130** further includes a gripping portion **136** interconnecting the first and second arms **132a, 132b** which can be gripped by the user to maneuver the spreader **100.** It will be apparent to a person having ordinary skill in the art, the handle unit **130** may be embodied in various forms and designs, including, but not limited to, a T-shape, and a D-shape. Further, the handle unit **130** is detachable when not in use and thus allowing convenience while storing the spreader **100** during packaging and transportation.

The bucket **102** further includes inverted hollow protrusions **138, 140** adjacent to the bottom portion **106** of the bucket **102.** The hollow protrusions **138, 140** are configured to receive side poles **142, 144** which are connected to a first bracket **146** and a second bracket **148.** The first and second brackets **146, 148** rotatably support an axle **150.** The axle **150** is attached to a pair of wheels **152** which are configured to move the spreader **100** on the ground in a direction of travel. The pair of wheels **152** may be rubber tires which may be pneumatic, semi-pneumatic or non-pneumatic tires, or caster wheels. Further, a motion transmission housing **154** (hereinafter referred to as the transmission housing **154**) is operatively mounted on the axle **150.** The transmission housing **154** may contain a bevel gears arrangement (not shown) configured to rotate a spindle (not shown) housed within a spindle housing **156** during the movement of the spreader **100.** The spindle is connected to an impeller (not shown), such that the spindle in turn rotates the impeller. The rotation of the impeller causes the fertilizer to be dispersed on the ground. In an embodiment, an agitating means may also be operatively connected to the spindle and disposed in the storage cavity **116** to stir or mix the material while spreading. In another embodiment, the transmission housing **154** may contain ring and pinion gears, hypoid gears, worm gears or the like. In various other embodiments, the transmission housing **154** may include a belt drive, a chain drive, or the like instead of the gear arrangement.

The spreader **100** includes at least one material dispensing hole embodied as a material dispensing hole **158** (shown in a detailed view in FIG. **1A**) disposed at the bottom portion **106** of the bucket **102.** In the illustrated embodiment, the material dispensing hole **158** have a substantial rectangular shape of a pre-determined size to appropriately discharge the granular material such as grains, seeds, fertilizers on the ground and it is disposed at a bottom surface **107** of the bucket **102.** In another embodiment, the material dispensing hole **158** may have other type of shape including, but not limited to, a circular, an oval, or a triangular opening. The material dispensing hole **158** may be formed by a stamping, a punching operation or formed during a moulding process. In this embodiment, the pre-determined size of the material dispensing hole **158** may be based on the design and application area of the spreader **100** and it corresponds to a full-open position of the material dispensing hole **158** which will allow a maximum rate of discharge or feed rate of the material through the material dispensing hole **158.** In another embodiment, the material dispensing hole **158** may be embodied as a plurality of material dispensing holes disposed at the bottom surface **107** of the bucket **102** and may be in an in-line configuration transversely extending between the first side wall **112** and the second side wall **114** with a stipulated spacing. In various alternative embodiments, the plurality of material dispensing holes may be provided along multiple rows (two or more rows) or arranged in a staggered configuration at the bottom surface **107** of the bucket **102.** These plurality of material dispensing holes may be disposed substantially at a back side of the bottom surface **107** of the spreader **100** towards the rear wall **110.** In case of multiple rows or staggered configuration of the plurality of material dispensing holes, a collective discharge from an entirety of the multiple rows or staggered configuration of the plurality of material dispensing holes corresponds to the full-open position which allow the maximum rate of discharge of the material through the plurality of material dispensing holes.

According to an embodiment of the present invention, the spreader **100** includes an adjustment mechanism **160** to control a rate of discharge of the material through the material dispensing hole **158.** The adjustment mechanism **160** includes an adjustment element **162** (also shown in the detailed view in FIG. **1A**) disposed over the material dispensing hole **158.** The adjustment element **162** is slidably mounted on the bottom surface **107** of the bucket **102.** The adjustment element **162** is slidably supported by slide rails **164.** The adjustment element **162** includes a solid portion **166** which is configured to cover the material dispensing hole **158** partly or fully depending on the positioning of the adjustment element **162.** In the detailed view in FIG. **1A****,** the solid portion **166** of the adjustment element **162** is fully covering the material dispensing hole **158.** So, in this arrangement the material will not be dispensed through the material dispensing hole **158.** The sliding movement of the adjustment element **162** is configured to vary a degree of opening of the material dispensing hole **158** between the full open position and full closed position. The adjustment element **162** may be a plate like structure having a cavity **168** to allowing spindle housing **156** to pass through the adjustment element **162** and connect to the impeller to disperse the material falling over the impeller from the material dispensing hole **158.**

In the embodiment, where the material dispensing hole **158** may be a plurality of material dispensing holes disposed at the bottom portion **106** or bottom surface **107** of the bucket **102.** The adjustment element **162** may be a strip disposed over the multiple rows or staggered configuration of the plurality of material dispensing holes and configured to slide over while maintaining a smooth contact with the surface of the bucket **102.** The adjustment element **162** is adapted to cover the entirety of the multiple rows or staggered configuration of the plurality of material dispensing holes which correspond to the full-closed position. Conversely, the movement of the adjustment element **162** uncovers the entirety of the multiple rows or staggered configuration of the plurality of material dispensing holes which correspond to the full-open position. In this embodiment, the adjustment element **162** may include a plurality of spaced apart cavities over the length of the strip. The number of cavities may be equal to the number of material dispensing holes. The cavities may be disposed on the adjustment element **162** in a way such that, the plurality of material dispensing holes and the cavities in the adjustment element **162** are in at least one of a conforming position, a non-conforming position or any intermediary position. Furthermore, in various other embodiments, the adjustment element **162** may have various shapes, including, but not limited to, a curved profile, a round shape, or a square shape, which is largely dependent on the shape of the bucket **102** and/or the arrangement of the material dispensing hole **158.** In an alternative embodiment, the adjustment element **162** may also be positioned to have a rotational movement while sliding.

The adjustment mechanism **160** further includes a manually actuable lever **170** pivotally coupled to the gripping portion **136** of the handle unit **130** by a pin joint **172.** The pin joint **172** is provided substantially at a mid-position of the gripping portion **136.** Alternatively, the pin joint **172** may be provided at any location along a length of the gripping portion **136** or the handle unit **130.** The lever **170** includes a handle **174** configured to be actuated by the user to move the lever **170** in a direction **A** while pivoting about the pin joint **172.**

According to an embodiment of the present invention, the lever **170** includes an attachment portion **176.** The attachment portion **176** extends along a substantially circular arc profile with a conforming slot **178** configured to couple with an inclusion element **180** at different locations over the length of the attachment portion **176.** The attachment portion **176** includes a serration or toothed profile and the complimentary profile provided on an inner section of the inclusion element **180** in order to lock at various positions over the length of the attachment portion **176.** The attachment portion **176** of the lever **170** defines an adjustment range **182.** The adjustment range **182** includes index markings (e.g. 0, 1, 2 and 3) along the adjustment range **182.** The index markings facilitate to remember and/or adjust the positioning of the inclusion element **180.** The inclusion element **180** further include a biasing element **181** held up within the slot **178** and in contact with an upper wall of the slot **178.** The biasing element **181** provides a constant downward force on the inclusion element **180** to firmly lock the inclusion element **180** at various positions over the length of the attachment portion **176.** The user may be required to adjust the biasing element **181** for moving the inclusion element **180** along the attachment portion **176.**

The adjustment mechanism **160** further includes a linking element **184.** The linking element **184** may be a cable, rope, or the like. The linking element **184** includes a first end **186** attached to an opening **190** on the attachment element **162** and a second end **188** attached to an opening **192** of the inclusion element **180.** Thus allow a pulling action along the linking element **184** caused by the movement of the lever **170** and consequently impart sliding movement to the adjustment element **162.** Further, the linking element **184** extending between the first and second ends **186, 188** may form a point of support **P** with the bucket **102.** The point of support **P** is a contact point of the linking element **184** with the surface of the bucket **102** in a substantially vertical direction of the linking element **184.** In various embodiments, the point of support **P** may or may not coincide with the first end **186** of the linking element **184.**

According to an embodiment of the present invention, the substantially circular arc profile of the attachment portion **176** have a geometric centre at the point of support **P,** with a radial distance **R,** of the linking element **184** with the surface of the bucket **102** while the position of the adjustment element **162** corresponds to full-closed position of the material dispensing hole **158.** The radial distance **R** is equal to a length of the linking element **184** measured between the point of support **P** and the second end **188** thereof. In an aspect of the present invention, the circular arc profile of the attachment portion **176** facilitates that the inclusion element **180** positioned at any position along the adjustment range **182** and will not have a slack or tension in the linking element **184.** In another embodiment, the linking element **184** may be a rigid rod with an intermediate bell crank lever for changing the direction of motion. In this embodiment, the position of the bell crank lever may coincide with the point of support **P.**

During operation, the spreading requirements of the material and/or the ground to be spreaded with the material may observe changes, therefore the rate of discharge of the material from the spreader **100** is required to be set accordingly. Particularly, the maximum rate of discharge of the material, such as, fertilizers, or grains, or seeds, and the like, is critical in agriculture, plantation and gardening/lawn-care applications. An accidental excessive discharge of the material not only increases the associated cost, but also degrades the soil quality and/or the health of the plantation. Moreover, sometimes the accidental excessive discharge of the specific fertilizers degrades one or more environmental factors, such as, the ground water quality and severely affects all sorts of living organisms and plantations in the area and the areas nearby thereto. According to an aspect of the present invention, the spreader **100** provided with the adjustment mechanism which allows the user to set the degree of opening of the material dispensing hole **158** as per the changes observed in the spreading requirements of the material and/or the ground to be spreaded with the material, and make possible a successful use of a sole spreader, the spreader **100,** without any additional incurred cost and apprehension of harmful environmental consequences.

When the spreader **100** is in idle position and not in use, the material dispensing hole **158** is completely covered with the adjustment element **162,** and a pull spring **183** (see detaled view) is configured to retain the adjustment element **162** over the dispensing hole **158.** The inclusion element **180** may be positioned on the attachment portion **176** as per the requirement of the material to be dispensed. Referring to the position of inclusion element **180** in FIG. **1A****,** the second end **188** of linking element **184** is exactly below the pin joint **172.** In this position of the inclusion element **180,** if the lever **170** is actuated by rotating about the pivot joint **172** it will result into a minimal or not at all opening of the material dispensing hole **158.** Moreover, a movement of the inclusion element **180** along the adjustment range **182** towards a free end of the attachment portion **176** will increase the degree of opening of the material dispensing hole **158** while the actuation of the lever **170.**

FIG. **1B** and FIG. **1C** illustrate perspective views of the spreader in a first working position **W1.** In the first working position **W1,** the inclusion element **180** is slightly shifted on the adjustment range **186** towards the free end the attachment portion **176.** When the lever **170** is in a relaxed position the solid portion **166** of the adjustment element **162** entirely covers the material dispensing hole **158.** At this position, the material will not be dispensed from the material dispensing hole **158.** When the user holds the handle **174** of the lever **170** and pivots about the pivot joint **172** in the direction **A,** the linking element **184** is pulled and the adjustment element **162** slides over the slide rails **164.** The sliding movement of the adjustment element **162** will uncover the material dispensing hole **158.** In this working position, the material dispensing hole **158** will be minimally opened, the degree of opening of the material dispensing hole **158** as seen in FIG. **1C****,** as the distance between the inclusion element **180** and the pin joint **172** is relatively less. The degree of opening of the material dispensing hole **158** will increase as the distance between the pin joint **172** and the inclusion element **182** increases. A scale printed on the adjustment range of the **182** will help the user to select and/or remember the position of the inclusion element **180.**

FIG. **1D** and FIG. **1E** illustrate perspective views of the spreader of the FIG. **1A** in a second working position **W2.** In the second working position **W2,** the inclusion element **180** is positioned along the adjustment range **186** at substantially midway thereof. When the user holds the handle **174** of the lever **170** and pivots about the pivot joint **172** in the direction **A,** the linking element **184** is pulled and the adjustment element **162** slides over the slide rails **164.** The sliding movement of the adjustment element **162** will uncover the material dispensing hole **158.** In this working position (**W2**), the degree of opening of the material dispensing hole **158** will be more as compared to the first working position **W1,** due to the fact that distance between the inclusion element **180** and the pin joint **172** is more than the distance in the first working position **W1** and thus, the second end **188** of the linking element **184** is moved close to the gripping portion **136** of the handle unit **130.**

FIG. **1F** and FIG. **1G** illustrate perspective views of the spreader of the FIG. **1A** in a third working position **W3.** In the third working position **W3,** the inclusion element **180** is positioned along the adjustment range **186** substantially close to the free end of thereof. When the user holds the handle **174** of the lever **170** and pivots about the pivot joint **172** in the direction **A,** the linking element **184** is pulled and the adjustment element **162** slides over the slide rails **164.** The sliding movement of the adjustment element **162** will uncover the material dispensing hole **158.** In this working position, the degree of opening of the material dispensing hole **158** will be maximum, as the distance between the inclusion element **180** and the pin joint **172** is maximum and thus, the second end **188** of the linking element **184** is moved further close to the gripping portion **136** of the handle unit **130.** As apparent from the FIGS. **1A** to **1G****,** according to an aspect of the present invention, the lever actuable control in the spreader **100** provides less complex and inexpensive solution to achieve varying degree of opening of the material dispensing hole **158** given a same hand movement or pressure pull by the user.

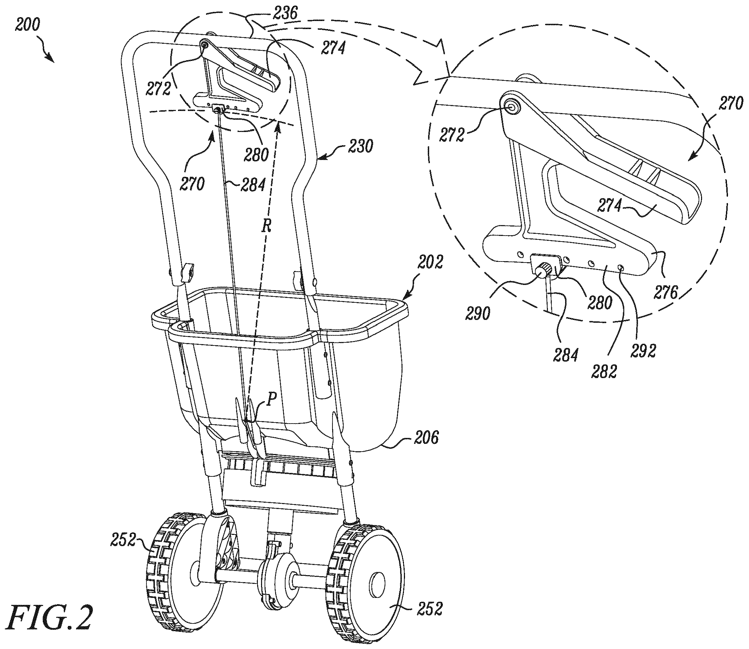

FIG. **2** illustrates a perspective view of a spreader **200,** according to another embodiment of the present invention. The spreader **200** includes a hopper or a bucket **202** having a bottom portion **206.** A handle unit **230** is detachably connected with the bucket **202.** The handle unit **230** further includes a gripping portion **236** which can be gripped by the user to maneuver the spreader **200.** It will be apparent to a person having ordinary skill in the art, the handle unit **230** may be embodied in various forms and designs, including, but not limited to, a T-shape, and a D-shape. Further, the handle unit **230** is detachable when not in use and thus allowing convenience while storing the spreader **200** during packaging and transportation. A pair of wheels **252** are provided and configured to move the spreader **200** on the ground in a direction of travel. The pair of wheels **252** may be rubber tires which may be pneumatic, semi-pneumatic or non-pneumatic tires, or caster wheels.

The spreader **200** includes at least one material dispensing hole (not shown in FIG. **2**) disposed at the bottom portion **206** of the bucket **202.** The material dispensing hole may have a substantially same configuration and size as described above in the description of the spreader **100.** Moreover, an adjustment mechanism (not shown) is provided to control a rate of discharge of the material through the material dispensing hole. The adjustment mechanism may have a substantially same configuration as described above in the description of the spreader **100.**

According to an embodiment of the present invention, the adjustment mechanism includes a manually actuable lever **270** pivotally coupled to the gripping portion **236** of the handle unit **230** by a pin joint **272.** The pin joint **272** is provided substantially at a mid-position of the gripping portion **236.** Alternatively, the pin joint **272** may be provided at any location along a length of the gripping portion **236** or the handle unit **230.** The lever **270** includes a handle **274** configured to be actuated by the user to move the lever **270** about the pin joint **272.**

According to an embodiment of the present invention, the lever **270** includes an attachment portion **276** (as seen in the detailed view). The attachment portion **276** extends along a substantially circular arc profile and configured to couple with an inclusion element **280** at different locations over the length of the attachment portion **276.** The attachment portion **276** includes threaded holes **292** and a screw **290** in order to lock the inclusion element **280** at various positions over the length of the attachment portion **276.** The attachment portion **276** of the lever **270** defines an adjustment range **282.** The adjustment range **282** may include index markings (e.g. 0, 1, 2 and 3) to facilitate to remember and/or adjust the positioning of the inclusion element **280.** The adjustment mechanism further includes a linking element **284.** The linking element **284** may be a cable, rope, or the like. The linking element **284** includes a first end attached to an attachment element and a second end attached to the inclusion element **280.** Thus allow a pulling action along the linking element **284** caused by the movement of the lever **270** and consequently impart sliding movement to the adjustment element. Further, the linking element **284** extending between the first and second ends may form a point of support **P** with the bucket **202.** The point of support **P** is a contact point of the linking element **284** with the surface of the bucket **202** in a substantially vertical direction of the linking element **284.**

According to an embodiment of the present invention, the substantially circular arc profile of the attachment portion **276** have a geometric centre at the point of support **P,** with a radial distance **R,** of the linking element **284** with the surface of the bucket **202** while the position of the adjustment element corresponds to full-closed position of the material dispensing hole. The radial distance **R** is equal to a length of the linking element **284** measured between the point of support **P** and the second end thereof. In an aspect of the present invention, the circular arc profile of the attachment portion **276** facilitates that the inclusion element **280** positioned at any position along the adjustment range **282** and will not have a slack or tension in the linking element **284.**

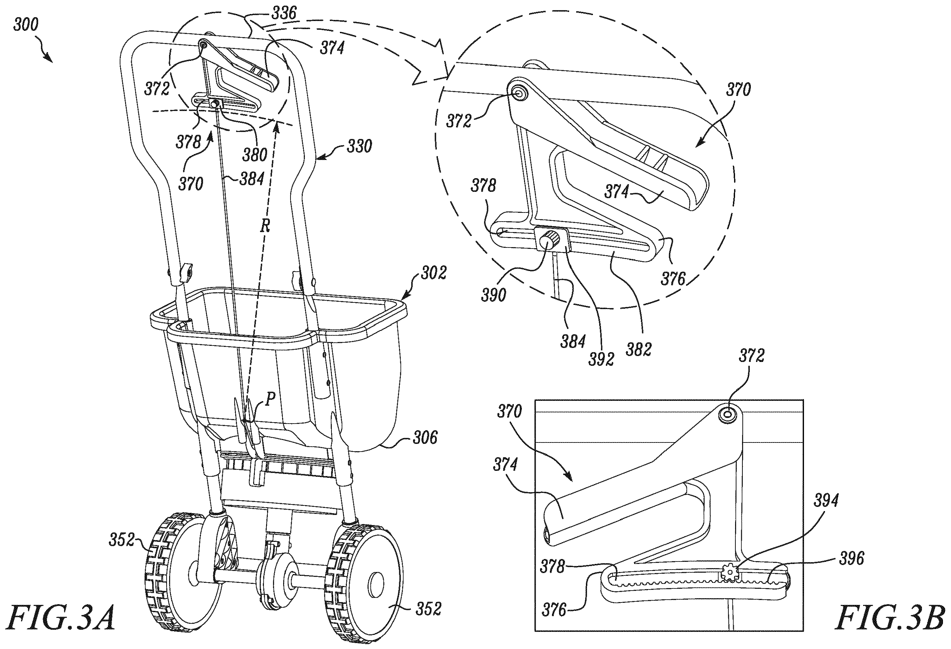

FIG. **3A** illustrates a perspective view of a spreader **300,** according to yet another embodiment of the present invention. The spreader **300** includes a hopper or a bucket **302** having a bottom portion **306.** A handle unit **330** is detachably connected with the bucket **302.** The handle unit **330** further includes a gripping portion **336** which can be gripped by the user to maneuver the spreader **300.** It will be apparent to a person having ordinary skill in the art, the handle unit **330** may be embodied in various forms and designs, including, but not limited to, a T-shape, and a D-shape. Further, the handle unit **330** is detachable when not in use and thus allowing convenience while storing the spreader **300** during packaging and transportation. A pair of wheels **352** are provided and configured to move the spreader **300** on the ground in a direction of travel. The pair of wheels **352** may be rubber tires which may be pneumatic, semi-pneumatic or non-pneumatic tires, or caster wheels.

The spreader **300** includes at least one material dispensing hole (not shown in FIG. **3A**) disposed at the bottom portion **306** of the bucket **302.** The material dispensing hole may have a substantially same configuration and size as described above in the description of the spreaders **100** and **200.** Moreover, an adjustment mechanism (not shown) is provided to control a rate of discharge of the material through the material dispensing hole. The adjustment mechanism may have a substantially same configuration as described above in the description of the spreaders **100** and **200.**

According to an embodiment of the present invention, the adjustment mechanism includes a manually actuable lever **370** pivotally coupled to the gripping portion **336** of the handle unit **330** by a pin joint **372.** The pin joint **372** is provided substantially at a mid-position of the gripping portion **336.** Alternatively, the pin joint **372** may be provided at any location along the gripping portion **336** or the handle unit **330.** The lever **370** includes a handle **374** configured to be actuated by the user to move the lever **370** about the pin joint **372.**

According to an embodiment of the present invention, the lever **370** includes an attachment portion **376** (as seen in the detailed view). The attachment portion **376** extends along a substantially circular arc profile such that an inclusion element **380** can be positioned at different locations over the length of the attachment portion **376.** The attachment portion **376** includes a slot **378** to allow pass through and hold a rotating knob **390** disposed on the inclusion element **380.** As illustrated in FIG. **3B****,** a detailed view, on the other side the slot **378** may include a rack gear profile **396** extending along the circular arc profile of the attachment portion **376,** further a pinion gear **394** attached to the rotating knob 390 is engaged with the rack gear profile **396.** The rotating knob **390** disposed on the inclusion element **380** allow movement of the inclusion element **380** along the attachment portion **376** via the rack gear profile **396** and the pinion gear **394.**

The attachment portion **376** of the lever **370** defines an adjustment range **382.** The adjustment range **382** may include index markings (e.g. 0, 1, 2 and 3) to facilitate to remember and/or adjust the positioning of the inclusion element **380.** The adjustment mechanism further includes a linking element **384.** The linking element **384** may be a cable, rope, or the like. The linking element **384** includes a first end attached to an attachment element and a second end attached to the inclusion element **380.** Thus allow a pulling action along the linking element **384** caused by the movement of the lever **370** and consequently impart sliding movement to the adjustment element. Further, the linking element **384** extending between the first and second ends may form a point of support **P** with the bucket **302.** The point of support **P** is a contact point of the linking element **384** with the surface of the bucket **302** in a substantially vertical direction of the linking element **384.**

According to an embodiment of the present invention, the substantially circular arc profile of the attachment portion **376** have a geometric centre at the point of support **P,** with a radial distance **R,** of the linking element **384** with the surface of the bucket **302** while the position of the adjustment element corresponds to full-closed position of the material dispensing hole. The radial distance **R** is equal to a length of the linking element **384** measured between the point of support **P** and the second end thereof. In an aspect of the present invention, the circular arc profile of the attachment portion **376** facilitates that the inclusion element **380** positioned at any position along the adjustment range **382** and will not have a slack or tension in the linking element **384.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### PART LIST:

- 100: spreader
- 102: bucket
- 104: open top
- 106: bottom portion
- 107: bottom surface
- 108: front wall
- 110: rear wall
- 112: first side wall
- 114: second side wall
- 116: storage cavity
- 118, 120: openings
- 122, 124: hollow protrusions
- 126, 128: side poles
- 130: handle unit
- 132a: first arm of the handle unit
- 132b: second arm of the handle unit
- 134: wing nut
- 136: gripping portion
- 138, 140: hollow protrusions
- 142, 144: side poles
- 146: first bracket
- 148: second bracket
- 150: axle
- 152: Pair of wheels
- 154: transmission housing
- 156: spindle housing
- 158: material dispensing hole
- 160: adjustment mechanism
- 162: adjustment element
- 164: slide rails
- 166: solid portion
- 168: cavity
- 170: lever
- 172: pin joint
- 174: handle
- 176: attachment portion
- 178: slot
- 180: inclusion element
- 181: biasing element
- 182: adjustment range
- 183: pull spring
- 184: linking element
- 186: first end of linking element
- 188: second end of linking element
- 190: opening
- 192: opening
- P: point of support
- R: radial distance
- W1: first working position
- W2: second working position
- W3: third working position
- A: direction
- 200: spreader
- 202: bucket
- 206: bottom portion
- 230: handle unit
- 236: gripping portion
- 252: Pair of wheels
- 270: lever
- 272: pivot pin
- 274: handle
- 276: attachment portion
- 280: inclusion element
- 282: adjustment range
- 284: linking element
- 290: screw
- 292: holes
- 300: spreader
- 302: bucket
- 306: bottom portion
- 330: handle unit
- 336: gripping portion
- 352: Pair of wheels
- 370: lever
- 372: pivot pin
- 374: handle
- 376: attachment portion
- 378: slot
- 380: inclusion element
- 382: adjustment range
- 384: linking element
- 390: knob
- 394: pinion gear
- 396: rack gear profile

## Claims

1. A spreader (**100, 200, 300**) comprising:
a bucket (**102, 202, 302**);
a handle unit (**130, 230, 330**) connected to the bucket (**102, 202, 302**);
a pair of wheels (**152, 252, 352**) attached to the bucket (**102, 202, 302**), wherein the pair of wheels (**152, 252, 352**) is configured to move the spreader (**100, 200, 300**);
at least one material dispensing hole (**158**) disposed at a bottom portion (**106, 206, 306**) of the bucket (**102, 202, 302**); and
an adjustment mechanism (**160**) for controlling a rate of discharge through the material dispensing hole (**158**), the adjustment mechanism (**160**) comprising:
an adjustment element (**162**) slidably mounted on the bucket (**102, 202, 302**) and disposed over the material dispensing hole (**158**), wherein a movement of the adjustment element (**162**) is configured to vary a degree of opening of the material dispensing hole (**158**) between a full open position and a full closed position;
a linking element (**184, 284, 384**) having a first end (**186**) and a second end (**188**), the first end (**186**) of the linking element (**184, 284, 384**) is attached to the adjustment element (**162**); and
a manually actuable lever (**170, 270, 370**) having an attachment portion (**176, 276, 376**) to support the second end (**188**) of the linking element (**184, 284, 384**),
**characterized in that**
the attachment portion (**176, 276, 376**) of the manually actuable lever (**170**) extending along a circular arc profile having a geometric centre at a point of support (**P**) of the linking element (**184, 284, 384**) with the bucket (**102, 202, 302**), and the second end (**188**) of the linking element (**184, 284, 384**) is movable along the attachment portion (**176, 276, 376**).

2. The spreader of claim 1, wherein the attachment portion (**176, 276, 376**) has a toothed profile to engage with an inclusion element (**180, 280, 380**) provided at the second end (**188**) of the linking element (**184, 284, 384**).

3. The spreader of claim 2, wherein the inclusion element (**180, 280, 380**) comprises a biasing element (**181**) configured to provide a constant downward force on the inclusion element (**180, 280, 380**) to firmly lock the inclusion element (**180, 280, 380**) at various positions over the length of the attachment portion (**176, 276, 376**).

4. The spreader of claim 1, wherein the attachment portion (**276**) has a plurality of holes (**292**) to detachably support the second end (**188**) of the linking element (**184, 284, 384**).

5. The spreader of claim 1, wherein the attachment portion (**376**) has a rack gear profile (**396**) to engage with a pinion gear (**394**) provided at the second end (**188**) of the linking element (**184, 284, 384**).

6. The spreader of claim 1, wherein the linking element (**184, 284, 384**) is a cable.

7. The spreader of claim 1, wherein the manually actuable lever (**170**, **270, 370**) is pivotally attached to the handle unit (**130, 230, 330**).

## Patentansprüche

1. Streuer **(100, 200, 300),** umfassend:
ein Eimer **(102, 202, 302);**
eine Griffeinheit **(130, 230, 330),** die mit dem Eimer (102, 202, 302) verbunden ist;
ein Paar Räder **(152, 252, 352),** die an dem Eimer **(102, 202, 302)** angebracht sind, wobei das Paar Räder **(152, 252, 352)** konfiguriert ist, um den Streuer **(100, 200, 300)** zu bewegen;
mindestens ein Materialabgabeloch **(158),** das an einem Bodenabschnitt **(106, 206, 306)** des Eimers **(102, 202, 302)** angeordnet ist; und
einen Einstellmechanismus **(160)** zum Steuern einer Abgaberate durch das Materialabgabeloch **(158),** wobei der Einstellmechanismus **(160)** umfasst:
ein Einstellelement **(162),** das verschiebbar auf dem Eimer **(102, 202, 302)** angebracht und über dem Materialabgabeloch **(158)** angeordnet ist, wobei eine Bewegung des Einstellelements **(162)** konfiguriert ist, um einen Öffnungsgrad des Materialabgabelochs **(158)** zu variieren zwischen einer vollständig offenen Position und einer vollständig geschlossenen Position;
ein Verbindungselement **(184, 284, 384)** mit einem ersten Ende **(186)** und einem zweiten Ende **(188),** wobei das erste Ende **(186)** des Verbindungselements **(184, 284, 384)** an dem das Einstellelement **(162)** befestigt ist; und
einen manuell betätigbaren Hebel **(170, 270, 370)** mit einem Befestigungsabschnitt **(176, 276, 376)** zum Abstützen des zweiten Endes (188) des Verbindungselements (184, 284, 384),
**dadurch gekennzeichnet, dass**
der Befestigungsabschnitt **(176, 276, 376)** des manuell betätigbaren Hebels **(170)** sich entlang eines Kreisbogenprofils mit einem geometrischen Mittelpunkt an einem Stützpunkt **(P)** des Verbindungselements **(184, 284, 384)** mit dem Eimer **(102, 202, 302)** erstreckt und das zweite Ende **(188)** des Verbindungselements **(184, 284, 384)** entlang des Befestigungsabschnitts **(176, 276, 376)** bewegbar ist.

2. Streuer nach Anspruch 1, wobei der Befestigungsabschnitt **(176, 276, 376)** ein gezahntes Profil zum Eingriff mit einem Einschlusselement **(180, 280, 380)** aufweist, das an dem zweiten Ende **(188)** des Verbindungselements **(184, 284, 384)** vorgesehen ist.

3. Streuer nach Anspruch 2, wobei das Einschlusselement **(180, 280, 380)** ein Vorspannelement **(181)** umfasst, das konfiguriert ist, um eine konstante nach unten gerichtete Kraft auf das Einschlusselement (**180, 280, 380**) bereitzustellen, um das Einschlusselement (**180, 280, 380**)an verschiedenen Positionen über die Länge des Befestigungsabschnitts (**176, 276, 376**) fest zu verriegeln.

4. Streuer nach Anspruch 1, wobei der Befestigungsabschnitt (**276**) eine Vielzahl von Löchern (**292**) aufweist, um das zweite Ende (**188**) des Verbindungselements (**184, 284, 384**) lösbar zu tragen.

5. Streuer nach Anspruch 1, wobei der Befestigungsabschnitt (**376**) ein Zahnstangenprofil (**396**) zum Eingriff mit einem Ritzel (**394**) aufweist, das an dem zweiten Ende (**188**) des Verbindungselements (**184, 284, 384**) vorgesehen ist.

6. Streuer nach Anspruch 1, wobei das Verbindungselement (**184, 284, 384**) ein Kabel ist.

7. Streuer nach Anspruch 1, wobei der manuell betätigbare Hebel (**170, 270, 370**) schwenkbar an der Griffeinheit (**130, 230, 330**) angebracht ist.

## Revendications

1. Un écarteur (100, 200, 300) comprenant:
un godet (102, 202, 302);
une unité de poignée (130, 230, 330) connectée au godet (102, 202, 302);
une paire de roues (152, 252, 352) attachées au godet (102, 202, 302), dans lequel la paire de roues (152, 252, 352) est configurée pour déplacer l'écarteur (100, 200, 300);
au moins un trou de distribution de matériau (158) disposé au niveau d'une partie inférieure (106, 206, 306) du godet (102, 202, 302); et
an mécanisme d'ajustement (160) pour contrôler une vitesse de décharge à travers du trou de distribution de matériau (158), le mécanisme d'ajustement (160) comprenant:
an élément d'ajustement (162) monté coulissant sur le godet (102, 202, 302) et disposé sur le trou de distribution de matériau (158), dans lequel un movement de l'élément d'ajustement (162) est configuré pour faire varier le degré d'ouverture du trou de distribution de matériau (158) entre une position complètement ouverte et une position complètement fermée;
un élément de liaison (184, 284, 384) ayant une première extrémité (186) et un deuxième extrémité (188), la première extrémité (186) de l'élément de liaison (184, 284, 384) est attachée à l'élément d'ajustement (162); et
un levier actionnable manuellement (170, 270, 370) ayant une partie de fixation (176, 276, 376) pour supporter la deuxième extrémité (188) de l'élément de liaison (184, 284, 384),
**caractérisé en ce que**
la partie de fixation (176, 276, 376) du levier actionnable manuellement (170) s'étendant le long d'un profil d'arc circulaire ayant un centre géométrique au niveau d'un point de support (P) de l'élément de liaison (184, 284, 384) avec le godet (102, 202, 302), et la deuxième extrémité (188) de l'élément de liaison (184, 284, 384) est mobile le long de la partie de fixation (176, 276, 376).

2. L'écarteur selon la revendication 1, dans lequel le partie de fixation (176, 276, 376) présente un profil denté pour coopérer avec un élément d'inclusion (180, 280, 380) prévu à la deuxième extrémité (188) de l'élément de liaison (184, 284, 384).

3. L'écarteur selon la revendication 2, dans lequel l'élément d'inclusion (180, 280, 380) comprend un élément de sollicitation (181) configuré pour fournir une force constante vers le bas sur l'élément d'inclusion (180, 280, 380) pour verrouiller fermement l'élément d'inclusion (180, 280, 380) à diverses positions sur la longueur de la partie de fixation (176, 276, 376).

4. L'écarteur selon la revendication 1, dans lequel le partie de fixation (276) comporte une pluralité de trous (292) pour supporter de façon détachable la deuxième extrémité (188) de l'élément de liaison (184, 284, 384).

5. L'écarteur selon la revendication 1, dans lequel le partie de fixation (376) comporte un profil d'engrenage à crémaillère (396) pour s'engager avec un pignon (394) prévu à la deuxième extrémité (188) de l'élément de liaison (184, 284, 384).

6. L'écarteur selon la revendication 1, dans lequel l'élément de liaison (184, 284, 384) est un câble.

7. L'écarteur selon la revendication 1, dans lequel le levier actionnable manuellement (170, 270, 370) est fixé de manière pivotante à l'unité de poignée (130, 230, 330).
